# EUROPEAN PATENT APPLICATION

(11) **EP 2 589 959 A2**
(43) Date of publication of application: **08.05.2013**
(21) Application number: 12190790.1
(22) Date of filing: 31.10.2012
(51) Int. Cl.: G01N 27/87

(54) **Inspection equipment for the inspection of magnetic defects of wire rope**

(30) Priority: 04.11.2011 JP 2011242519
(71) Applicant: Hitachi Ltd., Tokyo 100-8280 (JP); Hitachi Building Systems Co., Ltd., Tokyo 101-8941 (JP)
(72) Inventor: Asai, Daisuke, Tokyo, 100-8220 (JP); Ooishi, Terunobu, Tokyo (JP); Itou, Tomohiko, Tokyo (JP)
(74) Representative: MERH-IP Matias Erny Reichl Hoffmann

(57) **Abstract**

An inspection equipment to detect twist of a wire rope with high precision by taking influences of change in the rope pitch due to the relative movement between the rope and the inspection equipment and tension of the rope into consideration, a magnetization device (2) magnetizes a wire rope (1) in a longitudinal direction thereof, the wire rope being produced by twisting steel wire bundles; magnetic detectors (8a-8h) disposed near the wire rope detect magnetic flux leakage from the wire rope, an arithmetic unit calculates (9,10,11) a rope pitch using a relative velocity between the wire rope and the inspection equipment from an encoder (7) and the magnetic flux leakage and corrects (12) elongation of the rope due to the tension measured by a tension measurement unit (6,13) based on the calculated pitch to thereby calculate (14,15) twist of the rope, and supplies results of the calculation to determine acceptability or inacceptability of the rope (16,17).

## Description

### BACKGROUND OF THE INVENTION

The present invention relates to inspection equipment of a wire rope to inspect a wire rope which is produced by twisting bundles of steel wires and which is employed for, for example, an elevator and a crane.

Conventionally, the wire rope of this kind is produced by twisting bundles each including a plurality of fine steel wires (or simply wires). Since the steel-wire bundles are twisted into the wire rope, the steel wires come into contact with each other. Hence, not only the axial force of the wires, but also friction between the wires attributes to the suspension load in this structure. In general, force applied to each wire varies depending on the structure and the twisting way of the rope. Hence, various ropes are employed according to utilization purposes thereof. Additionally, steel wires of the wire rope break in a sequential fashion due to wear and abrasion of the wire rope. The number of breaks of wires increases when the wire rope is used longer, namely, according to the secular change. Hence, it is required to periodically conduct an inspection of the wire rope such that the number of wire breaks is measured to evaluate whether or not the wire rope is safely used.

Recently, there has been proposed a device to quantitatively measure the number of wire breaks in a wire rope by use of a wire rope tester adopting an electromagnetic defect detection method. For example, JP-A-7-198684 describes a wire rope defect detector in which a wire rope is magnetized in a longitudinal direction thereof by using, for example, a pair of permanent magnets. Between the magnets, a probe coil to detect a magnetic flux leaked from a broken position of a wire is arranged, to thereby inspect breaks of wires in the wire rope.

When the number of wire breaks exceeds a predetermined value, it is regarded as the end of expected life of the wire rope of, for example, an elevator, and the wire rope is replaced. Since the elevator cannot be used during the replacement of the wire rope, it is desirable that the wire rope is replaced less frequently. Steel wires of the wire rope break due to wear and abrasion thereof. That is, when the load applied to the rope is smaller and the number of positions at which the rope bends is smaller, the expected life of the rope is elongated and the number of operations for replacement of the rope is reduced. It is known that when the wire rope remarkably changes in its shape due to, for example, a plus (+) kink or a minus (-) kink, the wire rope has shorter life for the following reason. It is considered that the force applied to each steel wire differs from the original value assumed when the rope is designed and stress concentrates on particular steel wires. Such kink likely takes place also when the wire rope is greatly twisted; hence, when opening a package of wire ropes delivered to a site of use thereof, the user carefully handles the wire ropes not to twist them.

### SUMMARY OF THE INVENTION

The technique of JP-A-7-198684 is effective to quantitatively measure the number of steel wire breaks of a wire rope, but is accompanied by a problem that the technique is not applicable to the quantitative evaluation of twists of a wire rope installed.

In general, a wire rope is produced by twisting a plurality of strands. Hence, the strand twist angle changes when the wire rope twists. However, the change in the strand twist angle is small and oil and dust of the wire rope accumulate on the surface of the wire rope. It is hence difficult to measure the strand twist angle by measuring the external appearance of the wire rope. The wire rope twist also reflects in the rope pitch. When the wire rope twists in a direction to loosen the twisted state thereof, the rope pitch becomes larger and the wire rope is elongated. When the wire rope twists in a direction to tighten the twisted state thereof, the rope pitch is reduced and the wire rope becomes shorter. That is, the rope pitch also changes in association with the wire rope twist. Hence, the wire rope twist can be detected by measuring the rope pitch. However, also when it is desired to measure the rope pitch by measuring the external appearance of the wire rope, the measurement of the rope pitch is difficult due to oil and dust on the surface of the wire rope.

When the wire rope is magnetized by the defect detector described in JP-A-7-198684, a magnetic flux leaks from the wire rope. The magnetic flux leakage occurs when the path of the magnetic flux through a magnetic substance is changed due to a change in magnetic reluctance on the path of the magnetic flux, for example, in a situation in which the shape of the magnetic substance changes when the magnetic flux passes through the magnetic substance. In the defect detection method employed according to JP-A-7-198684, the wire rope is magnetized to detect magnetic flux leakage from a break position of the wire rope. Specifically, when a steel wire breaks, the magnetic reluctance is higher in the break position than in the periphery thereof. The magnetic flux leakage thus detected is due to the higher magnetic reluctance. In the wire rope viewed in the longitudinal direction, the strands each of which includes a steel wire itself or each of which is produced by twisting steel wires do not extend parallel to the longitudinal direction of the wire rope. Hence, depressions and projections exist in the surface of the wire rope. These depressions and projections become a factor to disturb the magnetic flux passage. Specifically, the magnetic reluctance is higher in the positions of depressions and projections than in the periphery thereof. Hence, a magnetic flux also leaks from these positions. That is, it is possible to determine depressions and projections of the strands by detecting the magnetic flux leakage from the positions, to thereby measure the rope pitch.

However, when the wire rope twist is measured by use of the magnetic flux leakage as in the technique of JP-A-7-198684, the measurement result is disturbed if relative movement takes place between the measurement device (defect detector) and the wire rope. Further, the rope pitch changes also by tension of the wire rope. These influences are to be taken into consideration to conduct the defect detection with high precision. It is hence regarded as difficult to put the measurement scheme to practical uses.

It is therefore a technical object of the present invention, which is devised to solve the problems above, to provide inspection equipment of a wire rope to detect, with high precision, quantity of the twist of a wire rope installed, by fully taking the influences from the relative movement between the wire rope and the inspection equipment and variation in the rope pitch into consideration.

To achieve the technical object, according to a first aspect of the present invention, there is provided wire rope inspection equipment, comprising magnetization means (2) to magnetize a wire rope (1) in a longitudinal direction thereof, the wire rope being produced by twisting a plurality of bundles of steel wires; magnetic detection means (8a-8h) disposed in the vicinity of the wire rope to detect magnetic flux leakage from the wire rope magnetized by the magnetization means; and/or arithmetic means (14, 15) to calculate a rope pitch by use of the magnetic flux leakage detected by the magnetic detection means and a relative velocity between the wire rope and the inspection equipment measured by relative velocity detection means (7) disposed in the inspection equipment or by relative velocity detection means (7) disposed outside the inspection equipment, the relative velocity being inputted as a result of detection to the arithmetic means, and to calculate a twist quantity of twist of the wire rope based on the rope pitch thus calculated.

According to a second aspect of the present invention, in the wire rope inspection equipment according to the first aspect, the magnetic detection means detects the magnetic flux leakage in a detection area within a circumscribed circle having a diameter of each of the bundles forming depressions and projections on a surface of the wire rope.

According to a third aspect of the present invention, the wire rope inspection equipment according to the first or second aspect further comprises tension measurement means (6, 13) to measure tension of the wire rope, wherein the arithmetic means corrects influence of quantity of elongation of the wire rope due to the tension measured by the tension measurement means, to calculate the twist quantity of the wire rope.

According to a fourth aspect of the present invention, the wire rope inspection equipment according to the third aspect further comprises a pair of elements of pushing means (3, 5) of nonmagnetic substance disposed on both sides with the magnetic detection means therebetween in a projected section (of the wire rope) in the magnetization means and an element of pushing means (4) of nonmagnetic substance disposed on a side in the magnetization means opposite to the side on which elements of pushing means are disposed, with the wire rope between the element of pushing means and the pair of elements of pushing means, wherein the tension measurement means (6) comprises a strain gauge (6) disposed at a predetermined position in the magnetization means on a side of the magnetization means opposite to a side thereof on which the magnetic detection means is disposed and the strain gauge measures quantity of change in strain in the magnetization means when the wire rope is bent by the element of pushing means toward the side of the pair of elements of pushing means to be set to a three-point bending state, to thereby calculate the tension of the wire rope.

According to a fifth aspect of the present invention, in the wire rope inspection equipment according to the fourth aspect, the relative velocity detection means in the inspection equipment comprises an encoder (7) comprising a rotating body disposed at a position to make contact with the wire rope in the three-point bending state in the tension measurement means, to calculate the relative velocity based on a result of measurement of quantity of rotation of the rotating body.

According to a sixth aspect of the present invention, in the wire rope inspection equipment according to the first aspect, the arithmetic means comprises frequency calculation means (9) to calculate a frequency of change in depressions and projections of strands in the wire rope based on the relative velocity and a design value of a twist pitch of the wire rope; band-pass filter means (14) to filter a signal to extract therefrom a frequency band with a predetermined width centered on the frequency calculated by the frequency calculation means; phase correction means (10) to correct a waveform obtained, by filtering by the band-pass filter means, an output signal indicating the magnetic flux leakage received from the magnetic detection means into data with respect to a position of the wire rope based on the relative velocity and to output the data; rope pitch calculation means (11) to measure a peak period in a waveform of an output signal of the data from the phase correction means, to thereby calculate the rope pitch; tension conversion means (13) to convert by use of the relative velocity, tension of the wire rope which is measured by tension measurement means disposed in or outside the inspection equipment and which is inputted as a result of measurement to the tension conversion means, into tension data with respect to a position of the wire rope; tension correction means (12) to calculate quantity of elongation of the wire rope with respect to the tension of the wire rope based on the tension data in the tension conversion means with respect to the rope pitch from the rope pitch calculation means and to calculate a twist ratio indicating a ratio of the quantity of elongation to quantity of elongation of the wire rope when the wire rope is not twisted; twist quantity conversion means (15) to convert the twist ratio obtained by the tension correction means into quantity of twist per pitch based on an initial twist ratio of the wire rope beforehand obtained or a design value of a twist pitch of the wire rope beforehand obtained and to calculate quantity of twist at each position in the longitudinal direction of the wire rope; and twist quantity confirmation means (16) to conform the waveform of an output signal of the data from the phase correction means by determining whether or not a waveform of an output signal indicating the twist quantity from the twist quantity conversion means is within a predetermined range of threshold values, to thereby judge acceptability or inacceptability of the wire rope.

According to a seventh aspect of the present invention, in the wire rope inspection equipment according to the sixth aspect, it is possible to operate the wire rope inspection equipment by freely changing a processing mode between a processing mode in which the initial twist ratio of the wire rope is employed when the twist quantity conversion means calculates the twist quantity and a processing mode in which the design value of the twist pitch of the wire rope is employed when the twist quantity conversion means calculates the twist quantity.

According to an eighth aspect of the present invention, in the wire rope inspection equipment according to the first aspect, the magnetic detection means comprises at least three magnetic detection elements in the longitudinal direction of the wire rope with an interval therebetween, the interval being substantially equal to a period of depressions and projections in the surface of the wire rope.

According to a ninth aspect of the present invention, the wire rope inspection equipment according to the eighth aspect further comprises extraction means to extract a median from detection values of magnetic flux leakage detected respectively by the at least three magnetic detection elements.

According to a tenth aspect of the present invention, the wire rope inspection equipment according to the first aspect further comprises output means (17) to output at least one of inspection time to inspect the wire rope and replacement time to replace the wire rope depending on the twist quantity of the wire rope calculated by the arithmetic means, the tension of the wire rope which is measured by tension measurement means disposed in or outside the inspection equipment and which is inputted as a result of measurement to the output means, and a history of uses of the wire rope.

According to the present invention, the wire rope inspection equipment includes an arithmetic function to correct the influences from the relative movement between the wire rope and the inspection equipment and the variation in the rope pitch due to tension of the wire rope. Hence, even when the inspection equipment is arranged for the wire rope beforehand installed, the quantity of twist of the wire rope can be detected with high precision, and the result of detection is employed to determine the state of the wire rope, that is, whether or not the wire rope is appropriately employed for an associated purpose.

### BRIEF DESCRIPTION OF THE DRAWINGS

FIG. 1 is a block diagram showing a basic configuration of wire rope inspection equipment in a first embodiment according to the present invention;
FIG. 2 is a diagram schematically showing a waveform of output signals from magnetic sensors disposed in the wire rope inspection equipment shown in FIG. 1;
FIG. 3A is a graph showing a waveform of output signals from the magnetic sensors disposed in the wire rope inspection equipment of FIG. 1, specifically, a change in the magnetic flux density with respect to time;
FIG. 3B is a graph showing a waveform of output signals from the magnetic sensors disposed in the wire rope inspection equipment of FIG. 1, specifically, a change in the relative velocity between the wire rope and the inspection equipment with respect to time;
FIG. 4 is a graph showing a signal waveform of output signals from the magnetic sensors described in conjunction with FIG. 3A, specifically, a change in the magnetic flux density with respect to the rope position;
FIG. 5A is an external appearance of the wire rope to explain positions of the wire rope and the magnetic sensors (first to third sensors) of the wire rope inspection equipment at time t1;
FIG. 5B is an external appearance of the wire rope to explain positions of the wire rope and the magnetic sensors of the wire rope inspection equipment at time t2;
FIG. 5C is an external appearance of the wire rope to explain positions of the wire rope and the magnetic sensors of the wire rope inspection equipment at time t3;
FIG. 6A is a graph showing a signal waveform of output signals from the first magnetic sensor, specifically, a change in the magnetic flux density with respect to time;
FIG. 6B is a graph showing a signal waveform of output signals from the second magnetic sensor, specifically, a change in the magnetic flux density with respect to time;
FIG. 6C is a graph showing a signal waveform of output signals from the third magnetic sensor, specifically, a change in the magnetic flux density with respect to time;
FIG. 7A is a graph showing a signal waveform of output signals from the magnetic sensors disposed in the wire rope inspection equipment of FIG. 1, specifically, a change in the magnetic flux density with respect to the rope position in the normal state of the wire rope;
FIG. 7B is a graph showing a signal waveform of output signals from the magnetic sensors of the wire rope inspection equipment, specifically, a change in the magnetic flux density with respect to the rope position in an amplitude abnormal state of the wire rope;
FIG. 7C is a graph showing a signal waveform of output signals from the magnetic sensors of the wire rope inspection equipment, specifically, a change in the magnetic flux density with respect to the rope position in a period abnormal state of the wire rope;
FIG. 8 is a block diagram showing a basic configuration of wire rope inspection equipment in a second embodiment according to the present invention; and
FIG. 9 is a block diagram showing a basic configuration of wire rope inspection equipment in a first variation according to the present invention.

### DESCRIPTION OF THE EMBODIMENTS

Referring now to the drawings, description will be given in detail of embodiments and a variation of the wire rope inspection equipment according to the present invention.

### First Embodiment

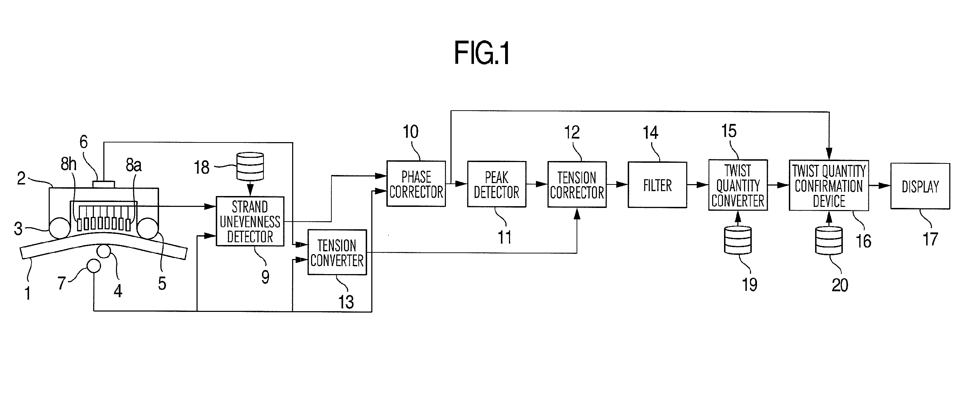

FIG. 1 shows a basic configuration of inspection equipment to inspect a wire rope 1 according to a first embodiment of the present invention.

The first embodiment of the inspection equipment to inspect the wire rope 1 includes a magnetization device 2 to magnetize the wire rope 1 in a longitudinal direction thereof, the wire rope 1 being produced by twisting a plurality of steel wire bundles; a plurality of magnetic sensors 8a to 8h which are arranged in the vicinity of the wire rope 1 and which detect magnetic flux leakage from the wire rope 1 magnetized by the magnetization device 2, and an arithmetic unit including processing circuits. The arithmetic unit calculates a rope pitch by use of a relative velocity between the wire rope 1 and the inspection equipment and the magnetic flux leakage detected by the magnetic sensors 8a to 8h and which corrects elongation of the wire rope 1 due to tension by use of the rope pitch thus calculated, to thereby calculate quantity of twist of the wire rope 1.

Specifically, in the inspection equipment, the magnetization device 2 magnetizes the wire rope 1 in the longitudinal direction. The wire rope 1 is deformed and is kept held in a three-point bending state by three rollers 3 to 5 which are pushing units including nonmagnetic substance. The magnetic sensors 8a to 8h are arranged on the inner side of the magnetization device 2 and in the proximity of a projected portion of the curve of the wire rope 1 with a gap therebetween, the gap matching the period of depressions and projections on the surface of the wire rope 1. In the inspection equipment, a strain gauge 6 is disposed at a predetermined position on a side of the magnetization device 2 opposite to the side on which the magnetic sensors 8a to 8h are arranged. In the magnetization device, the rollers 3 and 5 are disposed with the magnetic sensors 8a to 8h therebetween on a side in the projected section (of the wire rope) and the roller 4 is disposed on a side opposite to the side on which the rollers 3 and 5 are disposed. In the state in which the wire rope 1 is placed between the rollers 3 and 5 and the roller 4 disposed respectively opposite sides of the wire rope 1 as above, the roller 4 pushes the wire rope 1 such that the wire rope 1 is held in the three-point bending state between the rollers 3 and 5 and the roller 4. Then, due to reaction force of the wire rope 1, a change of strain takes place in the magnetization device 2. The strain gauge 6 measures the change of strain to thereby calculate tension of the wire rope 1. Hence, the magnetic sensors 8a to 8h and the strain gauge 6 function as a tension measuring unit in the inspection equipment to measure the tension of the wire rope 1 in the inspection equipment.

In the roller 4, an encoder 7 is installed as a relative velocity detecting unit in the inspection equipment, to measure a relative velocity between the inspection equipment and the wire rope 1. The encoder 7 includes a rotating body disposed in a contact portion thereof with the wire rope 1 in the three-point bending state of the tension measuring unit, to calculate the relative velocity based on the result of measurement of the quantity of rotations of the rotating body.

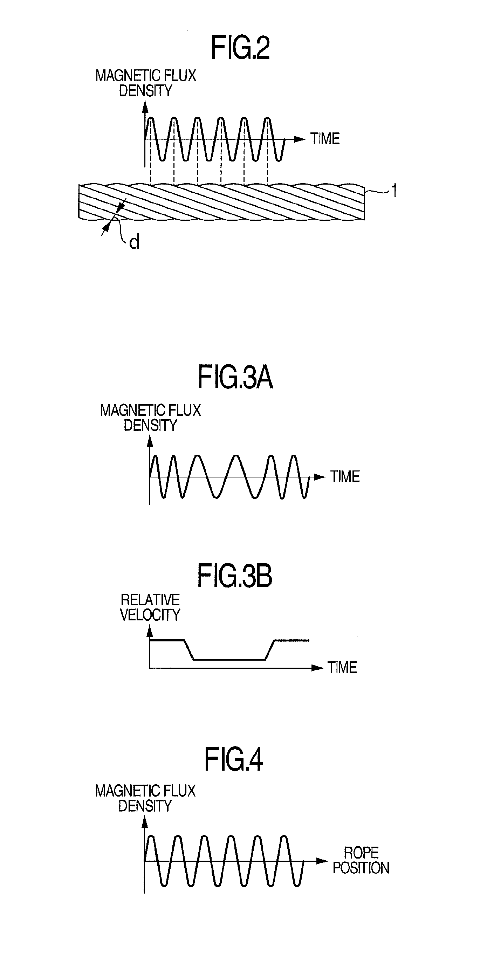

The magnetic sensors 8a to 8h detect magnetic flux leakage from depressions and projections of strands including steel wire bundles which form depressions and projections on the surface of the wire rope 1. The magnetic flux density is detected in a detection zone or area which is an area within a circumscribed circle or circumcircle having a diameter substantially equal to diameter d (shown in FIG. 2, which will be described later) of the strand including steel wire bundles (since steel wire bundles form depressions and projections, projected portions thereof make contact with the circumference in the circumcircle). From the magnetic sensors 8a to 8h, output signals indicating magnetic flux leakage are delivered to a strand unevenness detector 9.

For the output signals indicating magnetic flux leakage received from the magnetic sensors 8a to 8h, the strand unevenness detector 9 calculates a frequency of change in depressions and projections of the strands based on the relative velocity between the wire rope 1 and the inspection equipment calculated by the encoder 7 and the design value of distance between depressions and projections of the strands stored in a storage 18 (the design value of the twist pitch of the wire rope 1). Thereafter, a signal indicating the frequency is fed to a band-pass filter, which filters the signal to extract a band having a predetermined width centered on the frequency to output a resultant signal therefrom. In short, the strand unevenness detector 9 functions as a frequency calculation unit to calculate the frequency of a change in depressions and projections of the strands and a band-pass filter unit to extract a band having a predetermined width centered on the frequency.

The output signal indicating the band with a predetermined width from the strand unevenness detector 9 and the signal indicating the relative velocity from the encoder 7 are fed to a phase corrector 10. The respective magnetic sensors 8a to 8h are arranged to be positionally shifted in the longitudinal direction of the wire rope 1. Hence, a particular position of the wire rope 1 approaches the magnetic sensors 8a to 8h at different points of timing. The phase corrector 10 corrects the timing difference for the output signals from the magnetic sensors 8a to 8h indicating detected values of magnetic flux leakage, to obtain a signal for depressions and projections of one and the same strand. For this purpose, the phase corrector 10 calculates a delaying time to delay the output signal from each of the magnetic sensors 8a to 8h based on the signal of the relative velocity from the encoder 7. That is, the phase corrector 10 delays the output signals in a fashion in which the signal from the magnetic sensor 8a at a position least advanced in the moving direction of the wire rope 1 is most delayed. Based on the magnetic sensor 8h at a position most advanced in the moving direction of the wire rope 1, the output signals from the magnetic sensors 8a to 8h are phase-corrected into data associated with positions of the wire rope 1, not historical data with respect to time. Hence, the phase corrector 10 is a phase correction unit which corrects based on the relative velocity, the waveform obtained by filtering, by the band-pass filter unit of the strand unevenness detector 9, the output signals indicating magnetic flux leakage received from the magnetic sensors 8a to 8h, to obtain data associated with positions of the wire rope 1 and to output a resultant phase-corrected signal therefrom.

The phase-corrected signals from the phase corrector 10 thus produced by phase-correcting the output signals of magnetic flux leakage received from the magnetic sensors 8a to 8h are inputted to a peak detector 11. For each strand, eight output signals are produced from the magnetic sensors 8a to 8h. The peak detector 11 extracts a central value or a median from the output signals to output the median as pitch data of the strand. Hence, the peak detector 11 functions as an extraction unit to extract a median from the detected values of magnetic flux leakage received from the magnetic sensors 8a to 8h and a rope pitch calculation unit to calculate a rope pitch by measuring the peak period based on the waveforms of the output signals from the phase corrector 10. The pitch data of each strand outputted from the peak detector 11 is fed to a tension corrector 12, which will be described later.

On the other hand, the signal obtained by measuring tension of the wire rope 1 as quantity of change in strain of the magnetization device 2 received from the strain gauge 6 is inputted together with the signal indicating the relative velocity, from the encoder 7 to a tension converter 3. The tension converter 13 converts the signal from the strain gauge 6 indicating the quantity of change in strain based on the signal of the relative velocity from the encoder 7, to obtain a converted signal, i.e., tension data with respect to positions of the wire rope 1 and then outputs the converted signal to the tension corrector 12. Hence, the tension converter 13 is a tension conversion unit which conducts a conversion by use of the relative velocity measured by the encoder 7 and the tension of the wire rope 1 inputted as a result of measurement by the strain gauge 6, tension data associated with positions of the wire rope 1.

The rope pitch of the wire rope 1 also changes by the tension of the wire rope 1. Hence, to detect the quantity of twist of the wire rope 1 with high precision, it is required that the rope pitch and the tension of the wire rope 1 are simultaneously evaluated to remove the change in the rope pitch caused by the tension from the overall change in the rope pitch. That is, the tension corrector 12 calculates quantity of elongation associated with the tension of the wire rope 1 based on the tension at each position of the pitch data of each strand, and calculates a twist ratio represented by a ratio of the quantity of elongation to that of elongation when the wire rope 1 is not twisted, to thereby obtain the twist ratio for each strand. When the wire rope 1 includes eight strands, eight twist ratios are obtained to be delivered to a filter 14. Hence, the tension corrector 12 is a tension correction unit which calculates the quantity of elongation of the wire rope 1 with respect to the tension based on the tension data of the tension converter 13 in association with the rope pitch from the rope pitch calculation unit and which calculates the twist ratio representing a ratio of the quantity of elongation to that of elongation when the wire rope 1 is not twisted.

When the twist ratios of eight strands are received, the filter 14 obtains a median of the twist ratios and outputs the median as the twist ratio of the wire rope 1 to a twist quantity converter 15. The twist quantity converter 15 converters, based on the initial twist ratio of the wire rope 1 stored in a storage 19, the twist ratio received from the filter 14 into a twist quantity for each pitch, and calculates the twist quantity at each position in the longitudinal direction of the wire rope 1, to output the twist quantity to a twist quantity confirmation unit 16. Hence, the twist quantity converter 15 is a twist quantity conversion unit which converts, based on the beforehand obtained initial twist ratio of the wire rope 1, the twist ratio obtained by the tension corrector 12 into a twist quantity for each pitch and which calculates the twist quantity at each position in the longitudinal direction of the wire rope 1.

The twist quantity confirmation unit 16 receives the output signal of the twist quantity from the twist quantity converter 15 and the signals from the phase corrector 10 which are obtained by phase-correcting the output signals from the magnetic sensors 8a to 8h by the phase corrector 10. The twist quantity confirmation unit 16 confirms the amplitude and the period of the waveforms of output signals from the phase corrector 10 by determining whether or not the waveforms of output signals indicating the twist quantity received from the twist quantity converter 15 are within a predetermined range of threshold values, to thereby judge the state, i.e., acceptability or inacceptability of the wire rope 1. Hence, the twist quantity confirmation unit 16 functions as a twist quantity confirmation unit which confirms the waveforms of output signals from the phase corrector 10 by determining whether or not the waveforms of output signals indicating the twist quantity received from the twist quantity converter 15 are within a predetermined range of threshold values, to thereby judge the state of the wire rope 1.

If the amplitude and the period of the waveforms of output signals indicating the twist quantity are within the predetermined range of threshold values, the twist quantity confirmation unit 16 assumes that the state of the wire rope 1 is acceptable and drives a display 17 to display the result "acceptable". Otherwise, the twist quantity confirmation unit 16 assumes that the state of the wire rope 1 is not acceptable and instructs the display 17 to display the result "not acceptable", and then instructs the display 17 to display the value of the latest data assumed as acceptable. After the inspection is finished, the twist quantity confirmation unit 16 drives the display 17 to display the overall twist quantity of the wire rope 1. In a situation in which the inspection equipment inspects a wire rope 1 of an elevator system and is capable of recognizing a history of uses of the wire rope 1 in the elevator system, it is also possible to extend the arithmetic function of the twist quantity confirmation unit 16 such that the twist quantity confirmation unit 16 serves a function of an output unit which outputs at least one of the inspection time for inspection and the replacement time for replacement of the wire rope 1 to other devices depending on the output signals indicating the twist quantity of the wire rope 1 received from the twist quantity converter 15, the tension of the wire rope 1 measured by the strain gauge 6, and the history of uses of the wire rope 1 in the elevator system collected in advance.

FIG. 2 schematically shows a waveform of output signals from the magnetic sensors disposed in the wire rope inspection equipment of the first embodiment. When the wire rope 1 is magnetized in the longitudinal direction thereof by the magnetization device 2, magnetic flux leakage occurs in the wire rope 1. The magnetic flux leakage takes place when the path of the magnetic flux through a magnetic substance is changed due to a change in magnetic reluctance on the path of the magnetic flux, for example, in a situation in which the shape of the magnetic substance changes when the magnetic flux passes through the magnetic substance. In the wire rope 1 viewed in the longitudinal direction, the strands each of which is produced by twisting steel wires are not parallel to the longitudinal direction of the wire rope 1. Hence, depressions and projections exist in the surface of the wire rope 1. These depressions and projections become a factor to disturb the magnetic flux passage, and the magnetic reluctance is higher in the positions of depressions and projections than in the periphery thereof. Since a magnetic flux leaks from these positions, it is possible to detect depressions and projections of the strands based on a change in the magnetic flux density with respect to time as shown in FIG. 2, to thereby measure the rope pitch.

That is, as can be seen from FIG. 2, when the magnetic flux leakage is detected by the magnetic sensors 8a to 8h arranged in the vicinity of the surface of the wire rope 1 as shown in FIG. 1, the distance between peaks of the signal waveform associated with the magnetic flux leakage correspond to the distance between the depressions and projections of the strands.

However, when the relative velocity between the wire rope 1 and the inspection equipment changes, the period of magnetic flux leakage from the wire rope 1 also changes.

FIGS. 3A and 3B are schematic diagrams to explain, through signal waveform comparison, influences of change in the relative velocity between the wire rope 1 and the inspection equipment upon the output signals from the magnetic sensors 8a to 8h disposed in the inspection equipment of the first embodiment. FIG. 3A shows a signal waveform of the output signals from the magnetic sensors 8a to 8h with respect to time in relation to the magnetic flux density. FIG. 3B shows a signal waveform of the relative velocity between the wire rope 1 and the inspection equipment with respect to time. FIG. 4 shows a signal waveform of output signals from the magnetic sensors 8a to 8h with respect to the rope position, in place of time shown in FIG. 3A.

When the relative velocity between the wire rope 1 and the inspection equipment changes, for example, becomes smaller as shown in FIG. 3B, the period with which the magnetic flux leakage from the depressions and projections on the surface of the wire rope 1 passes through the magnetic sensor 8a of the inspection equipment also becomes smaller in association therewith. Hence, although no change appears in the signal waveform of the magnetic flux density with respect to the rope position as shown in FIG. 4, the period changes as shown in FIG. 3A.

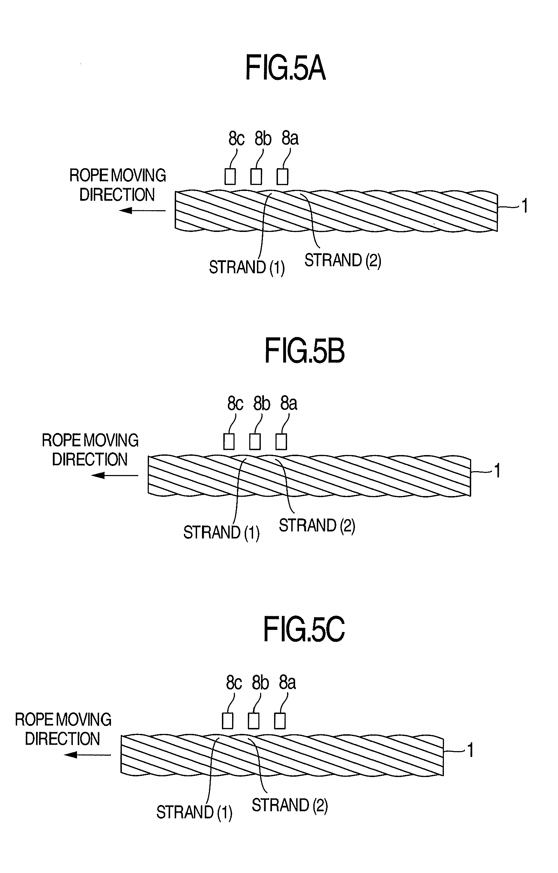

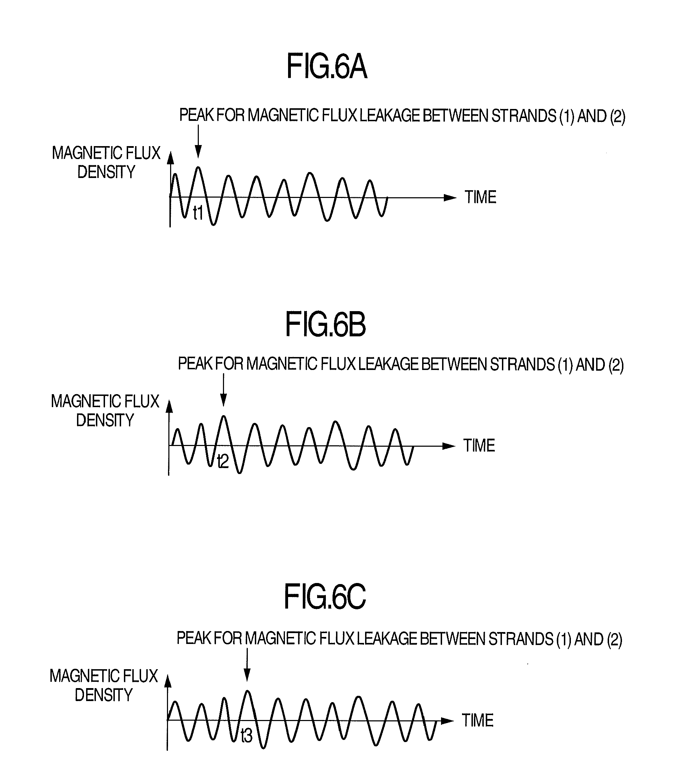

FIG. 5A to 5C are schematic diagrams to explain transitions of the positional relationship between the magnetic sensors 8a to 8h of the inspection equipment of the first embodiment and the wire rope 1 with respect to time. FIG. 5A shows positions of the wire rope 1 and the magnetic sensors 8a to 8h at time t1. FIG. 5B shows positions of the wire rope 1 and the magnetic sensors 8a to 8h at time t2. FIG. 5C shows positions of the wire rope 1 and the magnetic sensors 8a to 8h at time t3. FIGS. 6A to 6C are schematic diagrams to explain transitions of output signals from the magnetic sensors 8a to 8h with respect to time as described in conjunction with FIGS. 5A to 5C. FIG. 6A shows the output signal from the first magnetic sensor 8a, specifically, a change in the magnetic flux density with respect to time. FIG. 6B shows the output signal from the second magnetic sensor 8b, specifically, a change in the magnetic flux density with respect to time. FIG. 6C shows the output signal from the third magnetic sensor 8c, specifically, a change in the magnetic flux density with respect to time.

As shown in the drawings, the magnetic sensors 8a to 8h are arranged in the longitudinal direction of the wire rope 1. In the description below, the magnetic sensors 8a to 8c will be primarily employed. When the magnetic sensors 8a to 8c and the wire rope 1 are arranged at positions as shown in FIG. 5A, the peak of magnetic flux leakage between the strands (1) and (2) for the magnetic sensor 8a at time t1 approaches the magnetic sensor 8b at time t2 and the magnetic sensor 8c at time t3. In this situation, between the signal waveforms of magnetic flux leakage detected respectively by the magnetic sensors 8b and 8c, there exists a phase difference as indicated by the peaks of the magnetic flux leakage between the strands (1) and (2) shown in FIGS. 6B and 6C, respectively. In this fashion, even for the magnetic flux leakage from one and the same strand, the signal detection timing varies since the magnetic sensors 8a to 8c are at mutually different positions.

To overcome this difficulty, the phase corrector 10 executes processing to correct the output signals from the magnetic sensors 8a to 8c into positional information by use of the relative velocity indicating the moving velocity of the wire rope 1 from the encoder 7 and the interval (distance) between the magnetic sensors 8a to 8h beforehand known, to thereby obtain the output signals from the magnetic sensors 8a to 8h corresponding to the rope positions.

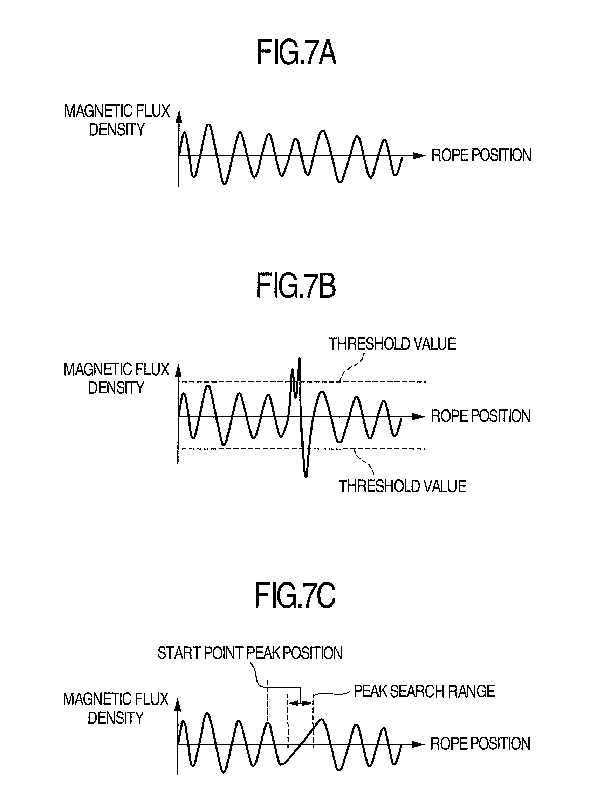

FIGS. 7A to 7C are graphs of signal waveforms to comparatively explain transitions of output signals from the magnetic sensors 8a to 8h of the inspection equipment of the first embodiment according to states of the wire rope 1. FIG. 7A is a graph showing a signal waveform of output signals from the magnetic sensors 8a to 8h, specifically, a change in the magnetic flux density with respect to the rope position in the normal state of the wire rope 1. FIG. 7B is a graph showing a signal waveform of output signals from the magnetic sensors 8a to 8h, specifically, a change in the magnetic flux density with respect to the rope position in an amplitude abnormal state of the wire rope 1. FIG. 7C is a graph showing a signal waveform of output signals from the magnetic sensors 8a to 8h, specifically, a change in the magnetic flux density with respect to the rope position in a period abnormal state of the wire rope 1.

If the surface of the wire rope 1 is free of defect or foreign matter such as powder of iron, the signal waveform of output signals from the magnetic sensors 8a to 8h is in the normal state, i.e., not disturbed as shown in FIG. 7A. If defect or foreign matter is present on the surface, the amplitude of the waveform has an excessive peak value as shown in FIG. 7B or the period is disturbed in the waveform as shown in FIG. 7C.

If the signal waveform of output signals from the magnetic sensors 8a to 8h is disturbed as above, the peak position cannot be correctly detected in the depressions and projections of the strand. To cope with the phenomenon of such disturbance in the signal waveform, the strand unevenness detector 9 extracts, from the output signals of magnetic flux leakage detected by magnetic sensors 8a to 8h, a median by removing the influence of the relative velocity upon the output signals of magnetic flux leakage. The phase corrector 10 corrects the resultant value into data associated with the position of the wire rope 1. The peak detector 11 obtains the rope pitch period based on the median of the rope pitch data of each strand. The tension corrector 12 corrects the elongation of the wire rope 1 due to the tension. The twist quantity confirmation unit 16 confirms whether or not the amplitude and the period of the original waveform of magnetic flux leakage are within a predetermined range, to thereby calculate the rope pitch free of the influence from the waveform variation. Hence, it is possible to appropriately carry out the wire rope inspection with higher inspection precision for the twist quantity.

### Second Embodiment

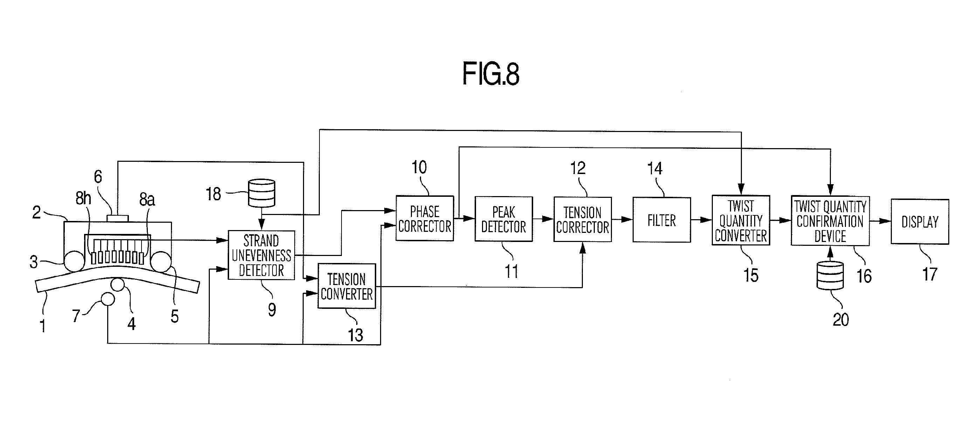

FIG. 8 shows a basic configuration of the inspection equipment to inspect a wire rope 1 according to a second embodiment of the present invention. In the inspection equipment of the first embodiment, the twist quantity converter 15 has the function to convert the twist ratio (measured twist ratio) from the filter 14 into the twist quantity per pitch based on the initial twist ratio of the wire rope 1 stored in the storage 19. In the inspection equipment of the second embodiment, there is disposed a function to convert, without using the storage 19, the twist ratio (measured twist ratio) from the filter 14 into the twist quantity per pitch based on the design values of distance between depressions and projections of strands stored in the storage 18. The other constituent components are substantially the same as for the first embodiment. That is, the inspection equipment of the second embodiment differs from that of the first embodiment in the twist quantity calculation method of the twist quantity converter 15.

### Third Embodiment

The inspection equipment to inspect a wire rope 1 according to a third embodiment of the present invention is configured by applying the configuration of the inspection equipment of the second embodiment shown in FIG. 8 to the inspection equipment of the first embodiment. Specifically, in the configuration shown in FIG. 1, the output from the storage 18 is connected to the twist quantity converter 15. Due to the configuration of the third embodiment, it is possible to select the operation between two processing modes, i.e., a processing mode in which the initial twist ratio of the wire rope 1 stored in the storage 19 is employed to calculate the twist quantity by the twist quantity converter 15 and a processing mode in which the design values of the twist pitch of the wire rope 1 stored in the storage 18 are employed to calculate the twist quantity by the twist quantity converter 15. First Variation

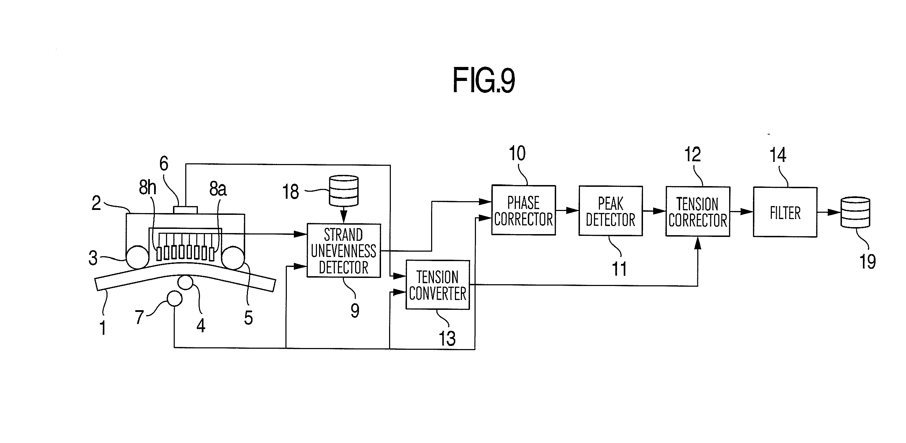

FIG. 9 shows a basic configuration of the wire rope inspection equipment to inspect a wire rope 1 according to a first variation of the present invention. The inspection equipment according to the first variation is implemented by removing the twist quantity converter 15, the twist quantity confirmation unit 16, the display 17, and the storage 20 from the inspection equipment of the first embodiment shown in FIG. 1. The initial twist ratio is stored in the storage 19 by use of the output from the filter 14.

In the embodiments 1 to 3 and the first variation, the relative velocity between the inspection equipment and the wire rope 1 is measured by the encoder 7 as the relative velocity detection unit in the inspection equipment. When an elevator is operated by installing the inspection equipment at a fixed position, it is also possible to employ a relative velocity detection unit outside the inspection equipment, to thereby measure the relative velocity via an operator's console of the elevator. Further, in the description of the embodiments 1 to 3 and the first variation, the tension of the wire rope 1 is measured by the strain gauge 6 (the tension measurement unit disposed in the inspection equipment), the wire rope 1 being set to the three-point bending state by the rollers 3 to 4 as the pushing units. However, if the magnitude of tension of the wire rope 1 can be obtained by use of the spring length (the design value of the spring constant of the wire rope 1) at a fixed end of the wire rope 1 or by a load cell (a tension measurement unit disposed outside the inspection equipment) installed at an end of the wire rope 1, it is possible that the tension of the wire rope 1 is supplied therefrom in place of the strain gauge 6 to the tension converter 13 or is supplied in addition to that from the strain gauge 6 to the tension converter 13. Also, if the variation in the tension of the wire rope 1 is small, it is possible to assume that the tension is uniform in the entire zone to input the representative value of tension as the design value of the spring constant to the tension converter 13. As above, the wire rope inspection equipment according to the present invention may be changed or modified into various embodiments, and the present invention is not restricted by the embodiments and the first variation described above.

## Claims

1. Wire rope inspection equipment, comprising:
magnetization means (2) to magnetize a wire rope (1) in a longitudinal direction thereof, the wire rope being produced by twisting a plurality of bundles of steel wires;
magnetic detection means (8a-8h) disposed in the vicinity of the wire rope to detect magnetic flux leakage from the wire rope magnetized by the magnetization means; and
arithmetic means (14, 15) to calculate a rope pitch by use of the magnetic flux leakage detected by the magnetic detection means and a relative velocity between the wire rope and the inspection equipment measured by relative velocity detection means (7) disposed in the inspection equipment or by relative velocity detection means (7) disposed outside the inspection equipment, the relative velocity being inputted as a result of detection to the arithmetic means, and to calculate a twist quantity of twist of the wire rope based on the rope pitch thus calculated.

2. Wire rope inspection equipment according to claim 1, wherein the magnetic detection means detects the magnetic flux leakage in a detection area within a circumscribed circle having a diameter of each of the bundles forming depressions and projections on a surface of the wire rope.

3. Wire rope inspection equipment according to claim 1 or 2, further comprising tension measurement means (6, 13) to measure tension of the wire rope, wherein
the arithmetic means corrects influence of quantity of elongation of the wire rope due to the tension measured by the tension measurement means, to calculate the twist quantity of the wire rope.

4. Wire rope inspection equipment according to claim 3, further comprising a pair of elements of pushing means (3, 5) of nonmagnetic substance disposed on both sides with the magnetic detection means therebetween in a projected section (of the wire rope) in the magnetization means and an element of pushing means (4) of nonmagnetic substance disposed on a side in the magnetization means opposite to the side on which elements of pushing means are disposed, with the wire rope between the element of pushing means and the pair of elements of pushing means, wherein
the tension measurement means (6) comprises a strain gauge (6) disposed at a predetermined position in the magnetization means on a side of the magnetization means opposite to a side thereof on which the magnetic detection means is disposed and
the strain gauge measures quantity of change in strain in the magnetization means when the wire rope is bent by the element of pushing means toward the side of the pair of elements of pushing means to be set to a three-point bending state, to thereby calculate the tension of the wire rope.

5. Wire rope inspection equipment according to claim 4, wherein the relative velocity detection means in the inspection equipment comprises an encoder (7) comprising a rotating body disposed at a position to make contact with the wire rope in the three-point bending state in the tension measurement means, to calculate the relative velocity based on a result of measurement of quantity of rotation of the rotating body.

6. Wire rope inspection equipment according to claim 1, wherein the arithmetic means comprises:
frequency calculation means (9) to calculate a frequency of change in depressions and projections of strands in the wire rope based on the relative velocity and a design value of a twist pitch of the wire rope;
band-pass filter means (14) to filter a signal to extract therefrom a frequency band with a predetermined width centered on the frequency calculated by the frequency calculation means;
phase correction means (10) to correct a waveform obtained, by filtering by the band-pass filter means, an output signal indicating the magnetic flux leakage received from the magnetic detection means into data with respect to a position of the wire rope based on the relative velocity and to output the data;
rope pitch calculation means (11) to measure a peak period in a waveform of an output signal of the data from the phase correction means, to thereby calculate the rope pitch;
tension conversion means (13) to convert by use of the relative velocity, tension of the wire rope which is measured by tension measurement means disposed in or outside the inspection equipment and which is inputted as a result of measurement to the tension conversion means, into tension data with respect to a position of the wire rope;
tension correction means (12) to calculate quantity of elongation of the wire rope with respect to the tension of the wire rope based on the tension data in the tension conversion means with respect to the rope pitch from the rope pitch calculation means and to calculate a twist ratio indicating a ratio of the quantity of elongation to quantity of elongation of the wire rope when the wire rope is not twisted;
twist quantity conversion means (15) to convert the twist ratio obtained by the tension correction means into quantity of twist per pitch based on an initial twist ratio of the wire rope beforehand obtained or a design value of a twist pitch of the wire rope beforehand obtained and to calculate quantity of twist at each position in the longitudinal direction of the wire rope; and
twist quantity confirmation means (16) to conform the waveform of an output signal of the data from the phase correction means by determining whether or not a waveform of an output signal indicating the twist quantity from the twist quantity conversion means is within a predetermined range of threshold values, to thereby judge acceptability or inacceptability of the wire rope.

7. Wire rope inspection equipment according to claim 6, wherein it is possible to operate the wire rope inspection equipment by freely changing a processing mode between a processing mode in which the initial twist ratio of the wire rope is employed when the twist quantity conversion means calculates the twist quantity and a processing mode in which the design value of the twist pitch of the wire rope is employed when the twist quantity conversion means calculates the twist quantity.

8. Wire rope inspection equipment according to claim 1, wherein the magnetic detection means comprises at least three magnetic detection elements in the longitudinal direction of the wire rope with an interval therebetween, the interval being substantially equal to a period of depressions and projections in the surface of the wire rope.

9. Wire rope inspection equipment according to claim 8, further comprising extraction means to extract a median from detection values of magnetic flux leakage detected respectively by the at least three magnetic detection elements.

10. Wire rope inspection equipment according to claim 1, further comprising output means (17) to output at least one of inspection time to inspect the wire rope and replacement time to replace the wire rope depending on the twist quantity of the wire rope calculated by the arithmetic means, the tension of the wire rope which is measured by tension measurement means disposed in or outside the inspection equipment and which is inputted as a result of measurement to the output means, and a history of uses of the wire rope.
